# EUROPÄISCHE PATENTSCHRIFT

(11) **EP 3 489 043 B1**
(45) Veröffentlichungstag und Bekanntmachung des Hinweises auf die Patenterteilung: **03.06.2020**
(21) Anmeldenummer: 17203535.4
(22) Anmeldetag: 24.11.2017
(51) Int. Cl.: B60C 23/04, B60C 9/00, B60C 9/02, B60C 9/18, B60C 11/00

(54) **FAHRZEUGREIFEN MIT EINER SENSORANORDNUNG**
VEHICLE TYRE WITH A SENSOR ASSEMBLY
PNEUMATIQUE DE VÉHICULE POURVU D'UN DISPOSITIF DE DÉTECTION

(43) Veröffentlichungstag der Anmeldung: 29.05.2019
(73) Patentinhaber: Continental Reifen Deutschland GmbH, 30165 Hannover (DE)
(72) Erfinder: BUSCHE, Joachim, 31157 Sarstedt (DE); BOISSET, Jean-Philippe, 82000 MONTAUBAN (FR); CIMPONERIU, Andrei-Stefan, 307220 Giroc (RO); CRISTEA, Florin Mihai, 307455 Varias (RO); DHARAMSHI, Parthiv, 93049 Regensburg (DE)
(74) Vertreter: Widjaja, Wira

(56) Entgegenhaltungen:
- WO-A1-2013/179152
- CH-A2- 708 955
- DE-A1- 10 156 776

## Beschreibung

Die Erfindung betrifft einen Fahrzeugreifen mit einer Sensoranordnung gemäß dem Oberbegriff des Anspruchs 1.

Fahrzeugräder mit Luft befüllten Fahrzeugreifen können Sensoranordnungen aufweisen, die aus einem Sensormodul, beispielsweise einem Drucksensor, und einem Sensor-Zentralmodul mit elektrischen Bauelementen, insbesondere einem Kommunikationsmodul und/oder einem Energieversorgungsmodul, bestehen. Diese Sensoranordnungen sind in einem Innenraum des Fahrzeugreifens angeordnet, um die jeweilige Messgröße zu erfassen. Zur Befestigung ist das Sensormodul und auch das Sensor-Zentralmodul direkt auf einer Felge des Fahrzeugrades oder direkt auf einem Innerliner bzw. einer Innenfläche des Fahrzeugreifens befestigt, wobei dazu jeweils ein Container vorgesehen ist, der auf der entsprechenden Fläche aufgeklebt ist und das Sensormodul bzw. das Sensor-Zentralmodul zumindest teilweise umschließt, sodass für einen gewissen Halt auch unter Belastung gesorgt wird. Dadurch ist es möglich, physikalische Messgrößen im Reifen aufzunehmen und zur weiteren Verarbeitung in das Fahrzeug auszugeben.

Nachteilig bei derartigen Lösungen ist, dass sich eine derartige Sensoranordnung nicht in den Reifen integrieren lässt, um physikalische Messgrößen direkt in der Reifenstruktur zu messen. Demnach sind die Container und auch das Sensormodul bzw. das Sensor-Zentralmodul nicht darauf ausgelegt, in die Reifenstruktur direkt integriert zu werden. Wird lediglich das Sensormodul in die Reifenstruktur integriert und das Sensor-Zentralmodul auf dem Innerliner belassen, so ist für eine elektrische Übertragung von Daten sowie für eine Energieversorgung zu sorgen. Dazu sind isolierte Kupferdrähte möglich, die über eine Lötverbindung sowohl mit dem Sensor-Zentralmodul als auch mit dem Sensormodul verbunden werden. Nachteilig hierbei ist, dass eine derartige Lötverbindung mit isolierten Kupferkabeln unter den dynamischen Belastungen, die direkt in der Reifenstruktur oder auch auf der Oberfläche auftreten, nicht standhalten kann. Zudem können mit Plastik isolierte Kupferkabel nicht dauerhaltbar in die Reifenstruktur eingearbeitet werden. Somit kann durch eine derartige Lösung keine Dauerhaltbarkeit der elektrischen Verbindung und somit der Funktionsfähigkeit der Sensoranordnung sichergestellt werden.

Ist eine drahtlose Übertragung von Daten vom Sensormodul in der Reifenstruktur auf das Sensor-Zentralmodul auf dem Innerliner vorgesehen, kann es durch das in einer Karkasse des Fahrzeugreifens angeordnete Stahlgewebe dazu kommen, dass die drahtlos durch das Stahlgewebe übertragenen Daten durch eine Art "Abschottung" negativ beeinflusst werden und somit aufwändige Filterungen vorgenommen werden müssen, um die Daten dennoch zuverlässig auszuwerten. Bei berührungslosen Messverfahren, bei denen das auf dem Innerliner angeordnete Sensormodul indirekt die Reifeneigenschaften z.B. induktiv oder kapazitiv erfasst, indem die jeweilige auf dem Innerliner noch vorherrschende Größe induktiv oder kapazitiv erfasst wird, weisen dieselbe Problematik auf, dass das Stahlgewebe diese Größen abschottet.

In EP 0 937 615 A2 oder US 6,666,080 B2 ist weiterhin vorgeschlagen, die Sensoranordnung vollständig im Bereich der Karkasse in den Fahrzeugreifen einzuarbeiten, so dass die Aufnahme der Messgrößen die Verarbeitung der Daten und auch die Energieversorgung in der Reifenstruktur stattfindet. Dazu kann beispielsweise ein piezoelektrisches Element vorgesehen sein, das im Betrieb des Fahrzeugreifens für eine Versorgung der Sensoranordnung mit Energie sorgt. Über ein in der Reifenstruktur eingebettetes Kommunikationsmodul kann eine drahtlose Übertragung der gemessenen Daten ins Fahrzeug stattfinden.

Nachteilig hierbei ist, dass bei einer derartigen Sensoranordnung eine Energieversorgung nur im Betrieb des Fahrzeugreifens stattfinden kann, da die Energieversorgung lediglich über das piezoelektrische Element erfolgt, das nur bei vorliegenden Schwingungen Energie erzeugt. Für die drahtlose Übertragung von Daten über das Kommunikationsmodul ins Fahrzeug ist zudem für eine ausreichende Energieversorgung zu sorgen. Dies kann aber beispielsweise im Stillstand nicht gewährleistet werden. Weiterhin kann auch ein piezoelektrisches Element allein nur in begrenztem Maße Energie bereitstellen, so dass für eine sichere und zuverlässige drahtlose Datenübertragung gegebenenfalls weitere Energieversorgungsmodule nötig sind, die allerdings viel Bauraum in der Reifenstruktur einnehmen, so dass die Sensoranordnung insgesamt sehr viel Platz in Anspruch nimmt. Allerdings ist lediglich ein begrenzter Bauraum im Bereich der Karkasse technisch möglich, ohne auch die Reifeneigenschaften zu beeinträchtigen, und zudem ist ein zu großer Bauraum für die Sensoranordnung in diesem Bereich auch nicht erlaubt.

Somit kann mit bekannten Sensoranordnungen im Fahrzeugreifen, die ausgebildet sind, physikalische Messgrößen, die die Reifeneigenschaften charakterisieren, auch direkt in der Reifenstruktur zu erfassen, eine dauerhafte und gleichzeitig zuverlässige Übertragung von Daten als auch eine Versorgung mit Energie nicht sichergestellt werden. Zudem kann bei einer Integration bekannter Sensoranordnungen in die Reifenstruktur nicht sichergestellt werden, dass sich die Reifeneigenschaften und somit das Fahrverhalten des Fahrzeugreifens dadurch beeinträchtigt werden.

Weitere Fahrzeugreifen mit einer Sensoranordnung sind in DE 101 56 776 A1, CH 708 955 A2 und WO 2013/179152 A1 offenbart.

Aufgabe der Erfindung ist es daher, einen Fahrzeugreifen mit einer Sensoranordnung bereitzustellen, bei dem diese Nachteile nicht auftreten und eine dauerhafte und zuverlässige Funktionsfähigkeit der Sensoranordnung gegeben ist.

Diese Aufgabe wird durch einen Fahrzeugreifen nach Anspruch 1 gelöst. Bevorzugte Weiterbildungen sind in den Unteransprüchen angegeben.

Erfindungsgemäß ist demnach vorgesehen, an einem Fahrzeugreifen eine ein Sensormodul, das zumindest teilweise in einer Reifenstruktur des Fahrzeugreifens eingebettet ist, mit einem Sensor-Zentralmodul verbindende Sensor-Zuleitung zumindest teilweise in die Reifenstruktur zu integrieren. Hierbei verläuft die Sensor-Zuleitung ausgehend von dem im Fahrzeugreifen zumindest teilweise eingebetteten Sensormodul in Richtung einer Außenfläche des Fahrzeugreifens und dieser folgend zu einer Innenfläche des Fahrzeugreifens. Entlang dieser gelangt die Sensor-Zuleitung zu dem in einem Innenraum des Fahrzeugreifens angeordneten Sensor-Zentralmodul.

Dadurch wird vorteilhafterweise bereits erreicht, dass ein in einer Reifenstruktur eingebettetes Sensormodul von einem im Innenraum, vorzugsweise auf einem Innerliner, befestigten Sensor-Zentralmodul aus versorgt und von dem Sensormodul erfasste Messgrößen an das Sensor-Zentralmodul zur weiteren Verarbeitung drahtgebunden übermittelt werden können. Demnach wird in der Reifenstruktur nur wenig Bauraum beansprucht und ein drahtloses Übertragen von Daten durch die Reifenstruktur kann vermieden werden, so dass die Signalqualität nicht durch die Übertragung, beispielsweise durch ein Stahlgewebe in einer Karkasse, leidet. Zudem kann mit der Integration der Sensor-Zuleitung in die Reifenstruktur eine Dauerhaltbarkeit ohne die Beeinträchtigung der Reifeneigenschaften gewährleistet werden, da die Sensor-Zuleitung in das Material des Fahrzeugreifens eingefügt bzw. mit diesem verschmolzen ist.

Vorzugsweise ist die Sensor-Zuleitung dazu strukturell in der Reifenstruktur und/oder oberflächennah in der Reifenstruktur integriert, um eine zuverlässige und dauerhaltbare Integration zu gewährleisten. Die strukturelle Integration und die oberflächennahe Integration können hierbei auch miteinander kombiniert werden.

Hierzu kann gemäß einer Ausführungsform vorgesehen sein, dass das Sensormodul zumindest teilweise in einem Laufstreifen und/oder in einer Karkasse und/oder zwischen dem Laufstreifen und der Karkasse eingebettet ist und die Sensor-Zuleitung ausgehend vom Sensormodul in dem Laufstreifen und/oder in der Karkasse und/oder zwischen dem Laufstreifen und der Karkasse strukturell integriert ist. Unter strukturell integriert ist hierbei zu verstehen, dass die Sensor-Zuleitung weit unter der Oberfläche der jeweiligen Reifenstruktur, d.h. vorzugsweise vollständig von dieser umgeben, in diese integriert ist. Dies kann beispielsweise im Herstellungsprozess des Fahrzeugreifens dadurch erfolgen, dass die Sensor-Zuleitung vor dem Aufbringen des Laufstreifens auf die Karkasse gelegt wird und sich somit nach der Herstellung des Fahrzeugreifens zumindest teilweise zwischen Karkasse und Laufstreifen befindet.

In dem Bereich, in dem die Sensor-Zuleitung in dieser Ausführungsform auf der Au-ßenfläche und der Innenfläche des Fahrzeugreifens geführt ist, kann eine oberflächennahe Integration der Sensor-Zuleitung vorgesehen sein. D.h. die strukturelle Integration im Bereich der Karkasse bzw. des Laufstreifens geht in eine oberflächennahe Integration im Bereich der Außenfläche und der Innenfläche über. Unter oberflächennahe Integration ist zu verstehen, dass die Sensor-Zuleitung nahe der Oberfläche und ggf. die Oberfläche teilweise ausbildend in das Material des Fahrzeugreifens eingefügt bzw. mit diesem verschmolzen ist.

Die Anordnung des Sensormoduls und der strukturell integrierten Sensor-Zuleitung kann hierbei vorteilhafterweise derartig ausgestaltet sein, dass in radialer Richtung bezüglich des Fahrzeugreifens zwischen dem Sensormodul und dem Sensor-Zentralmodul ein in der Karkasse eingebettetes Stahlgewebe angeordnet ist, d.h. zwischen dem Sensormodul und dem Sensor-Zentralmodul ist lediglich eine direkte Verbindung über das Stahlgewebe gegeben. Durch die erfindungsgemäße Anordnung der Sensor-Zuleitung, die dann in etwa parallel zum Stahlgewebe über die Außenfläche und die Innenfläche zum Sensor-Zentralmodul verläuft, kann ein Durchdringen des Stahlgewebes vorteilhafterweise vermieden werden, so dass sich die Reifeneigenschaften bzw. der strukturelle Zusammenhalt des Fahrzeugreifens dadurch nicht verändert und der Herstellungsprozess erleichtert wird.

Gemäß einer weiteren Ausführungsform ist vorgesehen, dass das Sensormodul in einer Seitenwand und/oder in einer Reifenschulter eingebettet ist und die Sensor-Zuleitung ausgehend vom Sensormodul in der Seitenwand und/oder in der Reifenschulter oberflächennah integriert ist und wie beschrieben oberflächennah integriert über die Außenfläche und die Innenfläche zum Sensor-Zentralmodul geführt ist.

Die strukturelle und/oder oberflächennahe Integration kann hierbei vorzugsweise durch Erhitzen und/oder in einem Vulkanisationsprozess erfolgen, so dass die Integration vorteilhafterweise in einem üblichen Reifenherstellungsprozess erfolgen kann.

Um die Sensor-Zuleitung von der Außenfläche zur Innenfläche zu führen, ist diese vorzugsweise über den Bereich eines Drahtkemes des Fahrzeugreifens geführt bzw. darum umgelegt. Somit kann vorteilhafterweise erreicht werden, dass die Sensor-Zuleitung derartig von der Außenfläche zur Innenfläche geführt ist, dass die Sensor-Zuleitung nicht vollständig durch die Reifenstruktur hindurch zu führen ist. Dadurch kann der Herstellungsprozess erleichtert werden und die Reifenstruktur nicht dadurch beeinträchtigt werden, dass die Reifenstruktur selbst durchstoßen wird.

Das Sensor-Zentralmodul ist vorzugsweise auf einem Innerliner bzw. auf der Innenfläche des Fahrzeugreifens befestigt. Dies kann über eine Klebung oder eine Einbettung in einem Container erfolgen, die bereits hinreichend bekannt ist, so dass Belastungen auf das Sensor-Zentralmodul abgefangen werden können und das Sensor-Zentralmodul an einer Position am Reifen angeordnet werden kann, an dem es keine Beschränkung des Bauraums gibt und an dem drahtlos übertragene Daten nicht wesentlich abgeschottet werden, wenn diese drahtlos beispielsweise ins Fahrzeug an eine übergeordnete Recheneinheit übertragen werden.

Die Sensor-Zuleitung ist vorzugsweise durch mindestens eine elektrisch leitfähige Ader zur Übertragung der von dem Sensormodul erfassten Messgröße und/oder von Energie ausgebildet. Demnach kann über die Ader sowohl eine Messgröße vom Sensormodul auf das Sensor-Zentralmodul als auch eine Energieversorgung des Sensormoduls sichergestellt werden. Bei Verwendung von mehr als einer Ader können mehrere Messgrößen unabhängig voneinander und die Messgrößen unabhängig von der Energie übertragen werden, so dass sich keine ungewollte Beeinflussung ergibt.

Um benachbarte Adern voneinander zu isolieren, kann die mindestens eine elektrisch leitfähige Ader von einer nicht-leitfähigen Gummiummantelung umhüllt sein, die ebenfalls in die Reifenstruktur entsprechend eingebettet werden kann. Die Gummiummantelung kann hierbei eine Dicke von zwischen 0,15 mm und 0,75 mm aufweisen, um eine zuverlässige Isolierung zu gewährleisten.

Ist die Sensor-Zuleitung durch mehrere Adern ausgebildet, können die Adern miteinander verdrillt sein. Dadurch können vorteilhafterweise äußere Einflüsse durch elektrische oder magnetische Felder oder auch ein Übersprechen zwischen einzelnen Adern vermieden werden.

Um eine gute Leitfähigkeit zu erhalten und eine gute Integration in den Reifen zu gewährleisten, können die Adern im Querschnitt beispielsweise oval oder rund oder rechteckig sein. Die Adern können dann je nach Art des Querschnitts eine Querschnittsfläche von zwischen 0,05 mm² und 54 mm² aufweisen, wobei die Querschnittsfläche herstellungsbedingt aufgrund eines Materialflusses und einer Deformation variieren kann.

Um die Leitfähigkeit der Sensor-Zuleitung zu gewährleisten, eine einfache Integration in die Reifenstruktur zu gewährleisten und gleichzeitig eine Beeinträchtigung der Reifeneigenschaften zu vermeiden, ist die Sensor-Zuleitung bzw. die einzelnen Adern aus einer Gummimischung mit leitfähigen Partikeln, beispielsweise Rußpartikel und/oder Aluminiumpartikel und/oder Partikel auf Kohlenstoffbasis, beispielsweise Kohlenstoffnanoröhrchen oder Graphen, gefertigt.

Um eine vorzugsweise drahtlose Übertragung der von dem Sensormodul erfassten Messgröße an eine Recheneinheit und/oder eine Energieversorgung des Sensor-Zentralmoduls sowie des Sensormoduls zu gewährleisten, weist das Sensor-Zentralmodul ein Kommunikationsmodul und/oder ein Energieversorgungsmodul auf, die jeweils über die Sensor-Zuleitung mit dem Sensormodul verbunden sind.

Anhand von Ausführungsbeispielen soll die Erfindung im Folgenden näher erläutert werden. Es zeigen:
- Fig. 1: ein Fahrzeugrad mit einem Fahrzeugreifen und einer Sensoranordnung;
- Fig. 2: einen Querschnitt des Fahrzeugreifens gemäß Figur 1; und
- Fig. 3: eine schematische Detailansicht des Fahrzeugreifens gemäß Figur 1 im Bereich der Sensoranordnung.

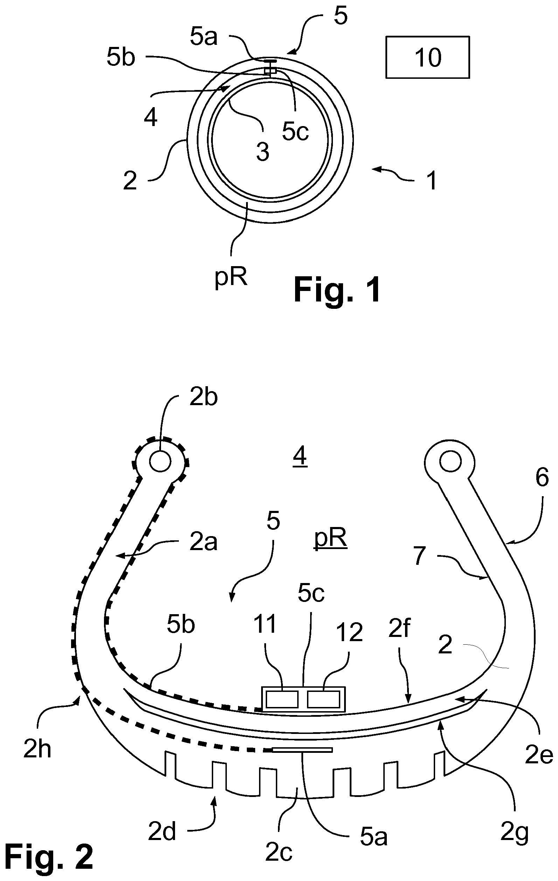

Gemäß Figur 1 ist eine schematische Ansicht eines Fahrzeugrades 1 gezeigt, das einen Fahrzeugreifen 2 aufweist, der auf einer Felge 3 aufgezogen ist. Ein zwischen der Felge 3 und dem Fahrzeugreifen 2 ausgebildeter Innenraum 4 kann in herkömmlicher Weise mit Luft befüllt werden, um einen gewissen Reifendruck pR einzustellen. Zum Erfassen von Reifeneigenschaften, beispielsweise einem Reifenabrieb, einer Temperatur, Verspannung im Fahrzeugreifen 2, einem Reibwert oder dgl., weist das Fahrzeugrad 1 weiterhin eine Sensoranordnung 5 auf, die sich zusammensetzt aus einem Sensormodul 5a, einer Sensor-Zuleitung 5b (in Fig. 2 gestrichelt) und einem Sensor-Zentralmodul 5c, wobei die Sensor-Zuleitung 5b das Sensormodul 5a elektrisch leitend mit dem Sensor-Zentralmodul 5c verbindet, sodass sowohl Daten bzw. Signale als auch Energie zwischen beiden Modulen 5a, 5c übertragen werden können. Das Sensormodul 5a ist wie aus den folgenden Figuren ersichtlich zumindest teilweise in einer Reifenstruktur des Fahrzeugreifens 2 integriert.

Aus Figur 2, die einen Querschnitt des Fahrzeugreifens 2 gemäß Figur 1 im Bereich der Sensoranordnung 5 darstellt, geht der Aufbau der Sensoranordnung 5 am Fahrzeugreifen 2 detailliert hervor:
Der Fahrzeugreifen 2 weist insbesondere eine Seitenwand 2a, einen Drahtkern 2b, eine Lauffläche 2c mit einer Profilierung 2d, eine Karkasse 2e, einen Innerliner 2f, ein in der Karkasse 2e unter der Lauffläche 2c angeordnetes Stahlgewebe 2g sowie eine Reifenschulter 2h. Das Stahlgewebe 2g ist hierbei in der Karkasse 2e eingebettet und sorgt für einen Zusammenhalt des unter dem Reifendruck pR stehenden Fahrzeugreifens 2. Insofern stellt der Querschnitt gemäß Figur 2 bis dahin den Aufbau eines herkömmlichen Radialreifens für ein Fahrzeug dar.

Die Sensoranordnung 5 ist derartig in den Fahrzeugreifen 2 eingearbeitet, dass das Sensor-Zentralmodul 5c auf dem Innerliner 2f angeordnet ist, d.h. auf einer Innenfläche 7 des Fahrzeugreifens 2, und das Sensormodul 5a in einem Bereich zwischen der Lauffläche 2c und der Karkasse 2e, das heißt insbesondere zwischen der Lauffläche 2c und dem Stahlgewebe 2g, sodass sich das Stahlgewebe 2g in radialer Richtung bezüglich des Fahrzeugreifens 2 zwischen dem Sensormodul 5a und dem Sensor-Zentralmodul 5c befindet. Das Sensormodul 5a ist demnach gemäß diesem Ausführungsbeispiel in der Reifenstruktur integriert und kann direkt mit dieser zusammenwirken, so dass aus diesem Zusammenwirken eine Messgröße erfasst werden kann, aus der eine bestimmte Reifeneigenschaft folgt.

Das Sensormodul 5a kann aber auch an einer beliebigen anderen Stelle angeordnet sein, beispielsweise in der Seitenwand 2a oder in der Schulter 2h des Fahrzeugreifens 2. Das Sensormodul 5a kann aber auch nur teilweise in der Reifenstruktur integriert sein, beispielsweise derartig, dass es von der Position in Fig. 2 ausgehend radial nach außen verläuft, bis es aus der Lauffläche 2c herausragt oder mit einer Außenfläche 6 des Fahrzeugreifens 2 flächig abschließt.

Das Sensormodul 5a ist ausgebildet, unterschiedliche physikalische Eigenschaften, die sich im Fahrbetrieb im Bereich der jeweiligen Reifenstruktur 2a, 2c, 2e, 2h, in der es integriert ist, einstellen oder entwickeln, zu erfassen. Durch die zumindest teilweise Integration in die Reifenstruktur 2a, 2c, 2e, 2h kann das Sensormodul 5a beispielsweise im Fahrbetrieb auf den Fahrzeugreifen 2 wirkende Kräfte oder Verspannungen im Bereich des Sensormoduls 5a erfassen. Weiterhin kann auch der Abrieb oder der Reibwert erfasst werden, wenn beispielsweise ein Teil des Sensormoduls 5a durch die Lauffläche 2c gesteckt wird und somit einen Teil der Lauffläche 2c selbst ausbildet und z.B. mit der Fahrbahn in Wechselwirkung treten kann.

Im Sensormodul 5a wird in Abhängigkeit der jeweiligen Wechselwirkung eine entsprechende Messgröße erzeugt, beispielsweise ein elektrischer Widerstand, eine Kapazität oder eine Induktivität, die verarbeitet werden kann, um z.B. über eine Kennlinie auf die jeweilig zu erfassende Reifeneigenschaft schließen zu können. Um diese vom Sensormodul 5a erfasste Messgröße zur weiteren Verarbeitung und/oder Übermittlung an eine übergeordnete Recheneinheit 10 auf das Sensor-Zentralmodul 5c zu übertragen, ist die Sensor-Zuleitung 5b vorgesehen, die ebenfalls zumindest bereichsweise in die Reifenstruktur des Fahrzeugreifens 2 integriert ist und die eine leitfähige Verbindung mit dem Sensormodul 5a ermöglicht.

Unter einer Integration ist in diesem Zusammenhang beispielsweise zu verstehen, dass die Sensor-Zuleitung 5b strukturell in den Fahrzeugreifen 2 eingebettet wird, das heißt wie in Figur 2 dargestellt, in einem Bereich zwischen der Lauffläche 2c und der Karkasse 2e oberhalb des Stahlgewebes 2g verläuft. Diese strukturelle Integration findet hierbei bereits während der Herstellung des Fahrzeugreifens 2 statt, so dass ein fertiger Fahrzeugreifen 2 mit zumindest bereichsweise strukturell integrierter Sensor-Zuleitung 5b bereitgestellt wird.

Diese Integration kann beispielsweise in dem Herstellungsschritt des Fahrzeugreifens 2 stattfinden, in dem auch das Sensormodul 5a in den Fahrzeugreifen 2 eingebettet wird. Dazu wird die Sensor-Zuleitung 5b mit dem Sensormodul 5a beispielsweise über ein entsprechendes Halbzeug an der gewollten Position auf die Karkasse 2e aufgelegt und anschließend der Laufstreifen 2c aufgebracht. In einem anschließenden Vulkanisierungsprozess verfließen die Sensor-Zuleitung 5b und die Gummimischung der entsprechenden Reifenstruktur durch das Erwärmen, so dass sich die Sensor-Zuleitung 5b automatisch in die Reifenstruktur einfügt.

Alternativ oder ergänzend kann, wie in Fig. 2 im Bereich der Seitenwand 2a und dem Stahlkern 2b dargestellt, auch eine oberflächennahe Integration der Sensor-Zuleitung 5b an der Außenfläche 6 und/oder an der Innenfläche 7 des Fahrzeugreifens 2 erfolgen. Auch hier findet nach dem Auflegen der Sensor-Zuleitung 5b auf die jeweilige Fläche 6, 7 während des Vulkanisationsprozesses ein Verfließen der Gummimischungen statt, so dass die Sensor-Zuleitung 5b oberflächennah in die jeweilige Reifenstruktur integriert werden kann. Somit wird nach der Herstellung ein Fahrzeugreifen 2 mit einer oberflächenintegrierten Sensor-Zuleitung 5b bereitgestellt. Die Oberflächen-Integration und die strukturelle Integration können somit beliebig miteinander kombiniert werden.

Gemäß Fig. 2 ist die Sensor-Zuleitung 5b demnach ausgehend vom Sensormodul 5a zunächst strukturell integriert und im Bereich der Reifenschulter 2h sowie der Seitenwand 2a oberflächenintegriert und dabei entlang der Außenfläche 6 des Fahrzeugreifens 2 in Richtung des Drahtkerns 2b geführt. Anschließend ist die Sensor-Zuleitung 5b im Bereich des Drahtkerns 2b um diesen umgelegt und erneut oberflächenintegriert entlang der Innenfläche 7 des Fahrzeugreifens 2 zum am Innerliner 2f befestigten Sensor-Zentralmodul 5c geführt und mit diesem elektrisch leitend verbunden.

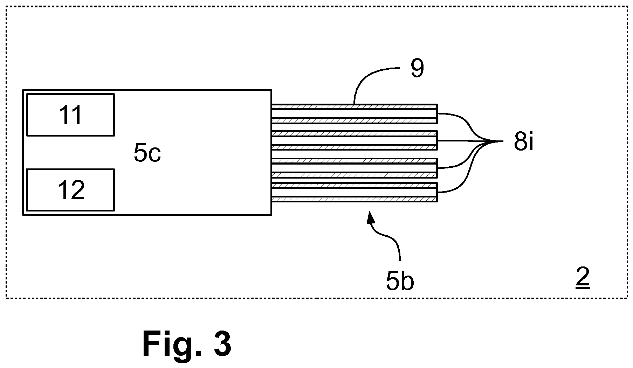

Die Sensor-Zuleitung 5b kann hierbei aus einer (i=1) oder wie in der Detailansicht gemäß Fig. 3 schematisch für einen Teil der Sensor-Zuleitung 5b angedeutet aus mehreren (i=4) Adern 8i bestehen, wobei jede Ader 8i als ein leitfähiger und elastischer Gummistreifen ausgeführt ist. Dazu kann beispielsweise eine Gummimischung verwendet werden, die leitfähige Partikel, beispielsweise Rußpartikel und/oder Aluminiumpartikel und/oder Partikel auf Kohlenstoffbasis, beispielsweise Kohlenstoffnanoröhrchen (CNT) oder Graphen, aufweist. Dadurch wird eine elastisch verformbare, dauerhaltbare und leitfähige Sensor-Zuleitung 5b mit mehreren Adern 8i bereitgestellt, die aufgrund der Ähnlichkeit der leitfähigen Gummimischung zum Material des Fahrzeugreifens 2, in die die Sensor-Zuleitung 5b integriert ist, die Reifeneigenschaften nicht maßgeblich beeinflusst und die sich im Vulkanisierungsprozess auch gut in die Gummimischung des Fahrzeugreifens 3 einfügen lässt. Als Gummimischung für die Adern 8i kann hierbei beispielsweise eine nicht-vulkanisierte Gummimischung ("green rubber") verwendet werden.

Um einen Kurzschluss zwischen mehreren Adern 8i einer Sensor-Zuleitung 5b zu vermeiden, kann eine nicht leitfähige Gummiummantelung 9 vorgesehen sein, die die Adern 8i gegeneinander isoliert und die in Fig. 3 schraffiert dargestellt ist. Als Gummimischung für die Gummiummantelung 9 kann beispielsweise ebenfalls eine nicht-vulkanisierte Gummimischung ("green rubber") verwendet werden, vorzugsweise dieselbe Gummimischung wie für die Adern 8i allerdings ohne die leitfähigen Partikel. Die Gummiummantelung kann beispielsweise eine Dicke von zwischen 0,15 mm und 0,75 mm aufweisen. Auch diese Gummiummantelung 9 wird zusammen mit den Adern 8i im Fahrzeugreifen 2 strukturell oder oberflächennah integriert, um eine Beeinflussung der Reifeneigenschaften so gut es geht zu vermeiden und sowie ein gutes einfügen in die jeweilige Reifenstruktur zu gewährleisten.

Um ergänzend eine ungewollte Beeinflussung der über die einzelnen Adern 8i übertragenen Daten bzw. Messgrößen durch äußere elektrische und/oder magnetische Störfelder und/oder durch Übersprechen zwischen einzelnen Adern 8i zu vermeiden, kann weiterhin vorgesehen sein, die mehreren Adern 8i zu verdrillen ("twisted pair") und diese verdrillten Adern 8i wie oben beschrieben zwischen dem Sensormodul 5a und dem Sensor-Zentralmodul 5c zu führen. Dadurch kann die Signalqualität verbessert werden, da ungewollte Einflüsse von außen und auch zwischen den Adern 8i minimiert werden können.

Der Querschnitt der einzelnen Adern 8i sowie der Gummiummantelung 9 der Sensor-Zuleitung 5b kann hierbei beispielsweise rechteckig, rund oder oval ausgeführt sein, um eine geeignete Integration in den Fahrzeugreifen 2 zu ermöglichen und den Fahrzeugreifen 2 dabei in seinen Reifeneigenschaften und seiner Reifenstruktur so wenig wie möglich zu beeinflussen.

Die Anzahl der Adern 8i kann hierbei beispielsweise zwischen zwei und sechs betragen, das heißt i = 2, 3, 4, 5, 6. Dadurch wird in einfacher Weise ermöglicht, über die Sensor-Zuleitung 5b auch mehrere Informationen parallel vom Sensormodul 5a an das Sensor-Zentralmodul 5c zu übertragen sowie auch eine von der Datenübertragung unabhängige Energieversorgung des Sensormoduls 5a sicherzustellen, ohne dass eine gegenseitige Beeinflussung zwischen Energieversorgung und Datenübertragung riskiert wird.

Somit kann über die Sensor-Zuleitung 5b vorteilhafterweise neben der Datenübertragung auch eine Energieversorgung des Sensormoduls 5a gewährleistet werden, ohne ein Energieversorgungsmodul direkt in der Reifenstruktur im Bereich des Sensormoduls 5a anzuordnen. Dazu kann das Sensor-Zentralmodul 5c wie in Fig. 2 dargestellt ein Energieversorgungsmodul 11 aufweisen, das in dieses integriert ist aber grundsätzlich auch damit leitfähig verbunden sein kann und das beispielsweise eine Batterie oder eine vergleichbare Energiequelle mit gespeicherter Energie aufweist bzw. dadurch ausbildet wird. Das Energieversorgungsmodul 11 ist also im Bereich des Innerliners 2f angeordnet, d.h. in einem Bereich des Fahrzeugreifens 2, in dem der Bauraum nicht kritisch ist. Über z.B. eine Batterie kann auch im Stillstand des Fahrzeugreifens 2 eine Energieversorgung sichergestellt werden und somit auch dann eine Aufnahme und Übertragung von Daten gewährleistet werden.

Gleichzeitig kann ein Kommunikationsmodul 12 vorgesehen sein, das im Sensor-Zentralmodul 5c integriert ist oder mit diesem verbunden ist. Das Kommunikationsmodul 12 ist dazu vorgesehen, vom Sensor-Zentralmodul 5c verarbeitete Daten, insbesondere die vom Sensormodul 5a ausgegebenen Messgrößen, aufzunehmen und vorzugsweise drahtlos an die übergeordnete Recheneinheit 10 zu übertragen, so dass eine weitere Verarbeitung der vom Sensormodul 5a aufgenommenen Messgrößen stattfinden kann. Das Kommunikationsmodul 12 wird dann vorzugsweise ebenfalls von dem Energieversorgungsmodul 11 mit Energie versorgt, so dass eine drahtlose Übertragung in jedem Fahrzustand des Fahrzeuges sichergestellt werden kann.

### Bezugszeichenliste

- 1: Fahrzeugrad
- 2: Fahrzeugreifen
- 2a: Seitenwand
- 2b: Drahtkern
- 2c: Lauffläche
- 2d: Profilierung
- 2e: Karkasse
- 2f: Innerliner
- 2g: Stahlgewebe
- 2h: Reifenschulter
- 3: Felge
- 4: Innenraum
- 5: Sensoranordnung
- 5a: Sensormodul
- 5b: Sensor-Zuleitung
- 5c: Sensor-Zentralmodul
- 6: Außenfläche
- 7: Innenfläche
- 8i: Adern
- 9: Gummiummantelung
- 10: Recheneinheit
- 11: Energieversorgungsmodul
- 12: Kommunikationsmodul

- pR: Reifendruck

## Patentansprüche

1. Fahrzeugreifen (2) mit einer Sensoranordnung (5), wobei die Sensoranordnung (5)
- ein Sensormodul (5a) zum Erfassen einer Messgröße,
- ein Sensor-Zentralmodul (5c) zum Verarbeiten und/oder Übertragen der vom Sensormodul (5a) erfassten Messgröße sowie
- eine Sensor-Zuleitung (5b) zum Verbinden des Sensormoduls (5a) mit dem Sensor-Zentralmodul (5c) aufweist,
wobei das Sensormodul (5a) in einer Reifenstruktur (2a, 2c, 2e, 2h) des Fahrzeugreifens (2) zumindest teilweise eingebettet ist,
wobei die Sensor-Zuleitung (5b) zumindest teilweise in der Reifenstruktur (2a, 2c, 2e, 2h) integriert ist
**dadurch gekennzeichnet, dass**
die Sensor-Zuleitung (5b) ausgehend von dem im Fahrzeugreifen (2) zumindest teilweise eingebetteten Sensormodul (5a) in Richtung einer Außenfläche (6) des Fahrzeugreifens (2) verläuft und dieser folgend zu einer Innenfläche (7) des Fahrzeugreifens (2) geführt ist und entlang dieser zu dem in einem Innenraum (4) des Fahrzeugreifens (2) angeordneten Sensor-Zentralmodul (5c) verläuft.

2. Fahrzeugreifen (2) nach Anspruch 1, **dadurch gekennzeichnet, dass** die Sensor-Zuleitung (5b) strukturell in der Reifenstruktur (2c, 2e) und/oder oberflächennah in der Reifenstruktur (2a, 2h) integriert ist.

3. Fahrzeugreifen (2) nach Anspruch 2, **dadurch gekennzeichnet, dass** das Sensormodul (5a) zumindest teilweise in einem Laufstreifen (2c) und/oder in einer Karkasse (2e) und/oder zwischen dem Laufstreifen (2c) und der Karkasse (2e) eingebettet ist und die Sensor-Zuleitung (5b) ausgehend vom Sensormodul (5a) in dem Laufstreifen (2c) und/oder in der Karkasse (2e) und/oder zwischen dem Laufstreifen (2c) und der Karkasse (2e) strukturell integriert ist.

4. Fahrzeugreifen (2) nach Anspruch 3, **dadurch gekennzeichnet, dass** in radialer Richtung bezüglich des Fahrzeugreifens (2) zwischen dem Sensormodul (5a) und dem Sensor-Zentralmodul (5c) ein in der Karkasse (2e) eingebettetes Stahlgewebe (2g) angeordnet ist.

5. Fahrzeugreifen (2) nach Anspruch 2, **dadurch gekennzeichnet, dass** das Sensormodul (5a) in einer Seitenwand (2a) und/oder in einer Reifenschulter (2h) eingebettet ist und die Sensor-Zuleitung (5b) ausgehend vom Sensormodul (5a) in der Seitenwand (2a) und/oder in der Reifenschulter (2h) oberflächennah integriert ist.

6. Fahrzeugreifen (2) nach einem der Ansprüche 2 bis 5, **dadurch gekennzeichnet, dass** die Sensor-Zuleitung (5b) in der Außenfläche (6) und in der Innenfläche (7) oberflächennah integriert ist.

7. Fahrzeugreifen (2) nach einem der Ansprüche 2 bis 6, **dadurch gekennzeichnet, dass** die strukturelle und/oder oberflächennahe Integration durch Erhitzen und/oder in einem Vulkanisationsprozess erfolgt.

8. Fahrzeugreifen (2) nach einem der vorhergehenden Ansprüche, **dadurch gekennzeichnet, dass** die Sensor-Zuleitung (5b) von der Außenfläche (6) über den Bereich eines Drahtkernes (2b) des Fahrzeugreifens (2) zur Innenfläche (7) geführt ist.

9. Fahrzeugreifen (2) nach einem der vorhergehenden Ansprüche, **dadurch gekennzeichnet, dass** die Sensor-Zuleitung (5b) derartig von der Außenfläche (6) zur Innenfläche (7) geführt ist, dass die Sensor-Zuleitung (5b) nicht vollständig durch die Reifenstruktur (2a, 2c, 2e, 2h) hindurchgeführt ist.

10. Fahrzeugreifen (2) nach einem der vorhergehenden Ansprüche, **dadurch gekennzeichnet, dass** das Sensor-Zentralmodul (5c) auf einem Innerliner (2f) oder auf der Innenfläche (7) des Fahrzeugreifens (2) befestigt ist.

11. Fahrzeugreifen (2) nach einem der vorhergehenden Ansprüche, **dadurch gekennzeichnet, dass** die Sensor-Zuleitung (5b) durch mindestens eine elektrisch leitfähige Ader (8i) zur Übertragung der von dem Sensormodul (5a) erfassten Messgröße und/oder von Energie ausgebildet ist.

12. Fahrzeugreifen (2) nach Anspruch 11, **dadurch gekennzeichnet, dass** die mindestens eine elektrisch leitfähige Ader (8i) von einer nicht-leitfähigen Gummiummantelung (9) umhüllt ist.

13. Fahrzeugreifen (2) nach einem der Ansprüche 11 oder 12, **dadurch gekennzeichnet, dass** die Sensor-Zuleitung (5b) durch mehrere Adern (8i) ausgebildet ist, wobei die mehreren Adern (8i) miteinander verdrillt sind.

14. Fahrzeugreifen (2) nach einem der vorhergehenden Ansprüche, **dadurch gekennzeichnet, dass** die Sensor-Zuleitung (5b) aus einer Gummimischung mit leitfähigen Partikeln, beispielsweise Rußpartikel und/oder Aluminiumpartikel und/oder Partikel auf Kohlenstoffbasis, beispielsweise Kohlenstoffnanoröhrchen oder Graphen, besteht.

15. Fahrzeugreifen (2) nach einem der vorhergehenden Ansprüche, **dadurch gekennzeichnet, dass** das Sensor-Zentralmodul (5c) ein Kommunikationsmodul (12) zur vorzugsweise drahtlosen Übertragung der von dem Sensormodul (5a) erfassten Messgröße an eine Recheneinheit (10) und/oder ein Energieversorgungsmodul (11) zur Energieversorgung des Sensor-Zentralmoduls (5c) sowie des Sensormoduls (5a) aufweist.

## Claims

1. Vehicle tyre (2) having a sensor arrangement (5), wherein the sensor arrangement (5)
- has a sensor module (5a) for recording a measured variable,
- a sensor central module (5c) for processing and/or transmitting the measured variable recorded by the sensor module (5a) and
- a sensor supply line (5b) for connecting the sensor module (5a) to the sensor central module (5c),
wherein the sensor module (5a) is at least partially embedded in a tyre structure (2a, 2c, 2e, 2h) of the vehicle tyre (2),
wherein the sensor supply line (5b) is at least partially integrated in the tyre structure (2a, 2c, 2e, 2h),
**characterized in that**
the sensor supply line (5b) runs, starting from the sensor module (5a) at least partially embedded in the vehicle tyre (2), in the direction of an outer surface (6) of the vehicle tyre (2) and is routed, following said outer surface, to an inner surface (7) of the vehicle tyre (2) and runs along said inner surface to the sensor central module (5c) arranged in an interior (4) of the vehicle tyre (2).

2. Vehicle tyre (2) according to Claim 1, **characterized in that** the sensor supply line (5b) is integrated structurally in the tyre structure (2c, 2e) and/or close to the surface in the tyre structure (2a, 2h).

3. Vehicle tyre (2) according to Claim 2, **characterized in that** the sensor module (5a) is at least partially embedded in a tread (2c) and/or in a carcass (2e) and/or between the tread (2c) and the carcass (2e) and the sensor supply line (5b), starting from the sensor module (5a), is integrated structurally in the tread (2c) and/or in the carcass (2e) and/or between the tread (2c) and the carcass (2e).

4. Vehicle tyre (2) according to Claim 3, **characterized in that** a steel mesh (2g) embedded in the carcass (2e) is arranged between the sensor module (5a) and the sensor central module (5c) in the radial direction with respect to the vehicle tyre (2).

5. Vehicle tyre (2) according to Claim 2, **characterized in that** the sensor module (5a) is embedded in a sidewall (2a) and/or in a tyre shoulder (2h) and the sensor supply line (5b), starting from the sensor module (5a), is integrated close to the surface in the sidewall (2a) and/or in the tyre shoulder (2h).

6. Vehicle tyre (2) according to one of Claims 2 to 5, **characterized in that** the sensor supply line (5b) is integrated close to the surface in the outer surface (6) and in the inner surface (7).

7. Vehicle tyre (2) according to one of Claims 2 to 6, **characterized in that** the structural integration and/or the integration close to the surface is achieved through heating and/or in a vulcanization process.

8. Vehicle tyre (2) according to one of the preceding claims, **characterized in that** the sensor supply line (5b) is routed from the outer surface (6) to the inner surface (7) via the region of a wire core (2b) of the vehicle tyre (2).

9. Vehicle tyre (2) according to one of the preceding claims, **characterized in that** the sensor supply line (5b) is routed from the outer surface (6) to the inner surface (7) in such a way that the sensor supply line (5b) is not routed completely through the tyre structure (2a, 2c, 2e, 2h) .

10. Vehicle tyre (2) according to one of the preceding claims, **characterized in that** the sensor central module (5c) is fastened on an inner liner (2f) or on the inner surface (7) of the vehicle tyre (2).

11. Vehicle tyre (2) according to one of the preceding claims, **characterized in that** the sensor supply line (5b) is formed by at least one electrically conductive wire (8i) for transmitting the measured variable recorded by the sensor module (5a) and/or energy.

12. Vehicle tyre (2) according to Claim 11, **characterized in that** the at least one electrically conductive wire (8i) is surrounded by a non-conductive rubber sheath (9).

13. Vehicle tyre (2) according to either of Claims 11 and 12, **characterized in that** the sensor supply line (5b) is formed by a plurality of wires (8i), wherein the plurality of wires (8i) are twisted together.

14. Vehicle tyre (2) according to one of the preceding claims, **characterized in that** the sensor supply line (5b) consists of a rubber blend containing conductive particles, for example carbon black particles and/or aluminium particles and/or carbon-based particles, for example carbon nanotubes or graphene.

15. Vehicle tyre (2) according to one of the preceding claims, **characterized in that** the sensor central module (5c) has a communication module (12) for the preferably wireless transmission of the measured variable recorded by the sensor module (5a) to a computer unit (10) and/or an energy supply module (11) for supplying energy to the sensor central module (5c) and the sensor module (5a).

## Revendications

1. Pneu de véhicule (2) pourvu d'un ensemble de capteurs (5), l'ensemble de capteurs (5) comportant
- un module de capteur (5a) pour détecter une grandeur mesurée,
- un module central de capteur (5c) pour traiter et/ou transmettre la valeur mesurée détectée par le module de capteur (5a), et
- une ligne d'alimentation de capteur (5b) pour relier le module de capteur (5a) au module central de capteur (5c),
le module de capteur (5a) étant au moins en partie incorporé dans une structure de pneu (2a, 2c, 2e, 2h) du pneu de véhicule (2),
la ligne d'alimentation de capteur (5b) étant au moins en partie intégrée dans la structure de pneu (2a, 2c, 2e, 2h),
**caractérisé en ce que** la ligne d'alimentation de capteur (5b) s'étend depuis le module de capteur (5a) incorporé au moins en partie dans le pneu de véhicule (2) en direction d'une surface extérieure (6) du pneu de véhicule (2) et est amenée en suivant celle-ci jusqu'à une surface intérieure (7) du pneu de véhicule (2) et s'étend le long de celle-ci jusqu'au module central de capteur (5c) disposé dans un espace intérieur (4) du pneu de véhicule (2).

2. Pneu de véhicule (2) selon la revendication 1, **caractérisé en ce que** la ligne d'alimentation de capteur (5b) est intégrée structurellement dans la structure de pneu (2c, 2e) et/ou est intégrée superficiellement dans la structure de pneu (2a, 2h).

3. Pneu de véhicule (2) selon la revendication 2, **caractérisé en ce que** le module de capteur (5a) est incorporé au moins en partie dans une bande de roulement (2c) et/ou dans une carcasse (2e) et/ou entre la bande de roulement (2c) et la carcasse (2e), et la ligne d'alimentation de capteur (5b) est intégrée structurellement en partant du module de capteur (5a) dans la bande de roulement (2c) et/ou dans la carcasse (2e) et/ou entre la bande de roulement (2c) et la carcasse (2e).

4. Pneu de véhicule (2) selon la revendication 3, **caractérisé en ce que** dans la direction radiale par rapport au pneu de véhicule (2), un treillis en acier (2g) incorporé dans la carcasse (2e) est disposé entre le module de capteur (5a) et le module central de capteur (5c).

5. Pneu de véhicule (2) selon la revendication 2, **caractérisé en ce que** le module de capteur (5a) est incorporé dans une paroi latérale (2a) et/ou dans une épaule de pneu (2h) et la ligne d'alimentation de capteur (5b), en partant du module de capteur (5a), est intégrée superficiellement dans la paroi latérale (2a) et/ou dans l'épaule de pneu (2h).

6. Pneu de véhicule (2) selon l'une quelconque des revendications 2 à 5, **caractérisé en ce que** la ligne d'alimentation de capteur (5b) est intégrée superficiellement dans la surface intérieure (6) et dans la surface intérieure (7).

7. Pneu de véhicule (2) selon l'une quelconque des revendications 2 à 6, **caractérisé en ce que** l'intégration structurelle et/ou superficielle est effectuée par chauffage et/ou lors d'un processus de vulcanisation.

8. Pneu de véhicule (2) selon l'une quelconque des revendications précédentes, **caractérisé en ce que** la ligne d'alimentation de capteur (5b) est amenée de la surface extérieure (6) à la surface intérieure (7) en passant par la zone d'un noyau en fil de fer (2b) du pneu de véhicule (2).

9. Pneu de véhicule (2) selon l'une quelconque des revendications précédentes, **caractérisé en ce que** la ligne d'alimentation de capteur (5b) est amenée de la surface extérieure (6) à la surface intérieure (7) de telle sorte que la ligne d'alimentation de capteur (5b) ne traverse pas complètement la structure de pneu (2a, 2c, 2e, 2h).

10. Pneu de véhicule (2) selon l'une quelconque des revendications précédentes, **caractérisé en ce que** le module central de capteur (5c) est fixé sur une gomme intérieure (2f) ou sur la surface intérieure (7) du pneu de véhicule (2).

11. Pneu de véhicule (2) selon l'une quelconque des revendications précédentes, **caractérisé en ce que** la ligne d'alimentation de capteur (5b) est réalisée par au moins un brin électroconducteur (8i) pour transmettre la grandeur mesurée détectée par le module de capteur (5a) et/ou de l'énergie.

12. Pneu de véhicule (2) selon la revendication 11, **caractérisé en ce que** ledit au moins un brin électroconducteur (8i) est enveloppé d'une gaine en caoutchouc non conductrice (9).

13. Pneu de véhicule (2) selon l'une quelconque des revendications 11 ou 12, **caractérisé en ce que** la ligne d'alimentation de capteur (5b) est réalisée par plusieurs brins (8i), les plusieurs brins (8i) étant torsadés ensemble.

14. Pneu de véhicule (2) selon l'une quelconque des revendications précédentes, **caractérisé en ce que** la ligne d'alimentation de capteur (5b) est composée d'un mélange de caoutchouc avec des particules conductrices, par exemple des particules de suie et/ou des particules d'aluminium et/ou des particules à base de carbone, par exemple des nanotubes de carbone ou du graphène.

15. Pneu de véhicule (2) selon l'une quelconque des revendications précédentes, **caractérisé en ce que** le module central de capteur (5c) présente un Kommunikationsmodul (12) pour transmettre préférence sans fil la grandeur mesurée détectée par le module de capteur (5a) à une unité de calcul (10) et/ou un module d'alimentation en énergie (11) pour alimenter en énergie le module central de capteur (5c) ainsi le module de capteur (5a).
